# EUROPÄISCHE PATENTSCHRIFT

(11) **EP 2 192 003 B1**
(45) Veröffentlichungstag und Bekanntmachung des Hinweises auf die Patenterteilung: **13.05.2020**
(21) Anmeldenummer: 09008957.4
(22) Anmeldetag: 09.07.2009
(51) Int. Cl.: B60Q 1/04

(54) **Kraftfahrzeug mit einer Fahrzeugkarosserie oder Fahrzeugbeplankung und einer Beleuchtungseinrichtung.**
Motor vehicle with a car body and a lighting device
Véhicule automobile avec une caisse et un dispositif d'éclairage

(30) Priorität: 27.11.2008 DE 102008059294
(43) Veröffentlichungstag der Anmeldung: 02.06.2010
(73) Patentinhaber: Dr. Ing. h.c. F. Porsche AG, 70435 Stuttgart (DE)
(72) Erfinder: Hunolt, Martin, 59557 Lippstadt (DE); Dambowy, Christoph, 75446 Wiernsheim (DE)

(56) Entgegenhaltungen:
- WO-A1-2008/101451
- DE-A1- 10 243 575
- FR-A1- 2 785 242
- GB-A- 1 227 418

## Beschreibung

Die vorliegende Erfindung betrifft ein Kraftfahrzeug, insbesondere Personenkraftwagen, mit den Merkmalen des Oberbegriffs des Anspruchs 1.

Aus der DE 102 34 224 A1 ist eine Beleuchtungseinrichtung bekannt. Sie umfasst zumindest ein Leuchtengehäuse, das über mehrere Kopplungsstellen in einer Gehäuseaufnahme gehalten ist, wobei die Gehäuseaufnahme an einer Fahrzeugkarosserie oder an einer Fahrzeugbeplankung ausgebildet ist. Die einzelnen Kopplungsstellen sind bei der bekannten Beleuchtungseinrichtung als Clipsverbindungen ausgestattet, so dass es möglich ist, das Leuchtengehäuse in die Gehäuseaufnahme einzustecken, wobei die Clipsverbindungen verrasten. Hierdurch ergibt sich eine besonders einfache Montage der Beleuchtungseinrichtung.

Ferner ist für ein Kraftfahrzeug aus der GB 1 227 418 A eine Beleuchtungseinrichtung bekannt, die ein Leuchtengehäuse aufweist und über mehrere Kopplungsstellen an der Fahrzeugkarosserie oder an der Fahrzeugbeplankung gehalten ist. Eine innere Kopplungsstelle ist als Kugelgelenk, die äußeren Kopplungsstellen sind als Schiebeführung ausgebildet.

WO 2008/101451 offenbart ein gattungsgemäßes Kraftfahrzeug.

Ein Fahrzeug weist in seiner Außenhaut Fugen auf, die dort entstehen, wo separat hergestellte und separat montierte Beplankungsteile aneinander grenzen. Qualitativ hochwertige Fahrzeuge zeichnen sich insbesondere durch ein exaktes Fugenbild aus. Die Fugen zeigen dann insbesondere über ihre Länge eine konstante Fugenbreite. Gerade im Bereich von Beleuchtungseinrichtungen ist es häufig problematisch, ein exaktes Fugenbild zu realisieren, beispielsweise zwischen dem Leuchtengehäuse und Beplankungsteilen, welche ein Fenster des Leuchtengehäuses einfassen.

Die vorliegende Erfindung beschäftigt sich mit dem Problem, für ein Kraftfahrzeug der eingangs genannten Art eine verbesserte Ausführungsform anzugeben, die sich insbesondere dadurch auszeichnet, dass sie die Herstellung eines gewünschten Fugenbilds vereinfacht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Leuchtengehäuse innen über ein Kugelgelenk zu lagern und beabstandet davon über wenigstens zwei Schiebeführungen zu positionieren. Durch die vorgeschlagene Bauweise ist das Leuchtengehäuse um einen durch das Kugelgelenk definierten Mittelpunkt räumlich beweglich, so dass es insbesondere möglich ist, das Leuchtengehäuse zum Einstellen eines gewünschten Fugenbilds zu justieren.

Erfingungsgemäß wird die innere Kopplungsstelle aufnahmeseitig an einem Wandungsteil der Gehäuseaufnahme ausgebildet sein, während die äußeren Kopplungsstellen aufnahmeseitig jeweils an einer Halteleiste der Gehäuseaufnahme ausgebildet sind, wobei diese Halteleiste bezüglich des besagten Wandungsteils verstellbar ist bzw. ein separates Bauteil bildet. Mit Hilfe einer derartigen, insbesondere separaten, Halteleiste kann die Relativlage der äußeren Kopplungsstellen bezüglich der inneren Kopplungsstelle verändert werden, was eine Justierung des Leuchtengehäuses für den Fall ermöglicht, dass die durch Schiebeführungen gebildeten äußeren Kopplungsstellen zur Verbesserung ihrer Haltewirkung so ausgestaltet sind, dass sie selbst räumliche Bewegungen um den Mittelpunkt der inneren Kopplungsstelle nicht oder nur sehr begrenzt zulassen.

Dementsprechend kann die Halteleiste bei einer vorteilhaften Weiterbildung relativ zum Wandungsteil justierbar angeordnet sein, so dass durch Justieren der Relativlage der Halteleiste ein Spaltmaß zwischen Leuchtengehäuse und Fahrzeugkarosserie bzw. Fahrzeugbeplankung einstellbar ist. Auf diese Weise wird eine besonders einfache Möglichkeit zum Justieren des Fugenbilds bereitgestellt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, der nur durch die Ansprüche limitiert ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht von unten und von hinten eines Leuchtengehäuses,
- Fig. 2: eine perspektivische Ansicht von oben und von vorne einer Gehäuseaufnahme,
- Fig. 3: eine perspektivische Ansicht von vorne und von oben einer montierten Beleuchtungseinrichtung bei transparent dargestelltem Leuchtengehäuse.

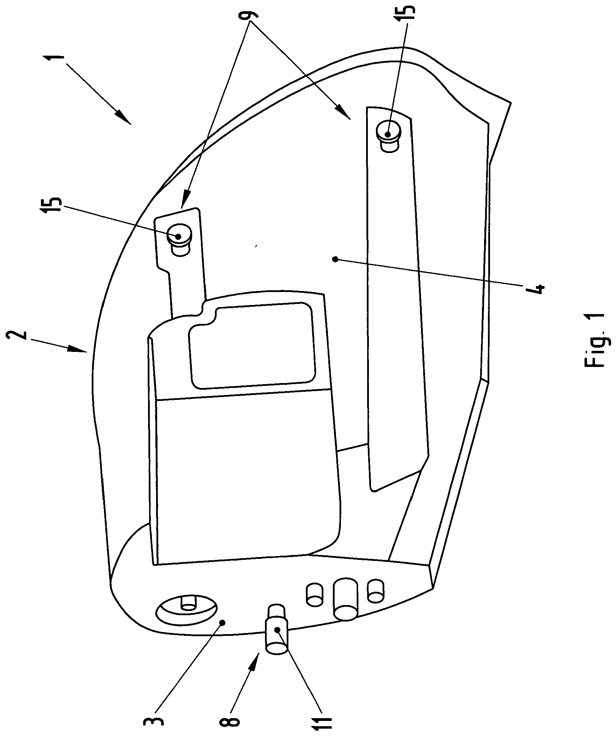

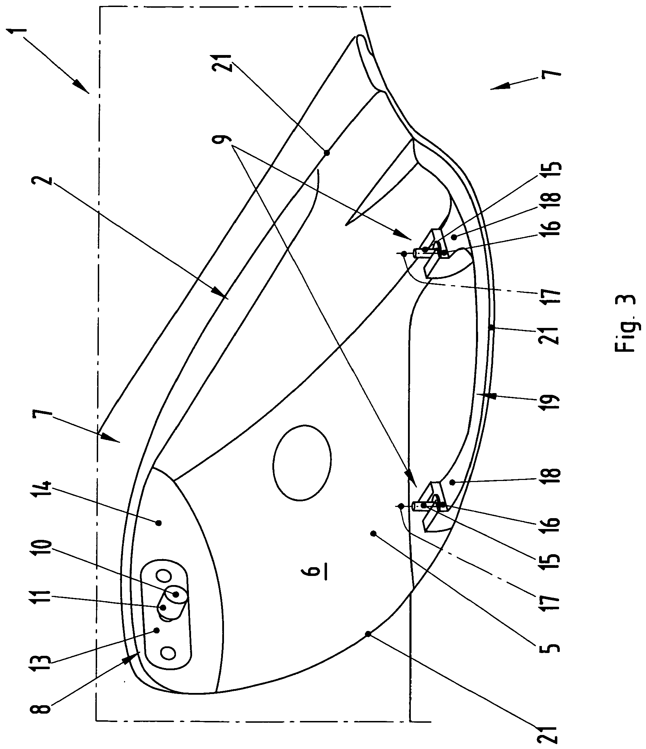

Entsprechend den Fig. 1 bis 3 umfasst eine Beleuchtungseinrichtung 1, die für eine Verwendung bei einem Kraftfahrzeug, insbesondere bei einem Personenkraftwagen, vorgesehen ist, zumindest ein Leuchtengehäuse 2. Die Blickrichtung in Fig. 1 ist so gewählt, dass vom Gehäuse 2 eine Rückseite 3 und eine Unterseite 4 erkennbar sind. Im Unterschied dazu zeigt Fig. 3 eine Vorderseite 5 des Gehäuses 2, die ein Fenster enthalten kann oder als Fenster ausgestaltet ist. Im zusammengebauten Zustand nimmt das Leuchtengehäuse 2 Leuchtmittel auf, wie zum Beispiel Scheinwerfer, Standlichter und Blinkleuchten. Durch das jeweilige Fenster kann das von den Leuchtmitteln erzeugte Licht aus dem Leuchtengehäuse 2 austreten.

Fahrzeugseitig umfasst die Beleuchtungseinrichtung 1 eine Gehäuseaufnahme 6. Diese ist zum Beispiel an einer Fahrzeugkarosserie oder gemäß Fig. 3 an einer Fahrzeugbeplankung 7 ausgebildet. Im montierten Zustand ist das Leuchtengehäuse 2 in die Gehäuseaufnahme 6 eingesetzt. Zum Fixieren des Gehäuses 2 in der Aufnahme 6 sind mehrere Kopplungsstellen vorgesehen, nämlich eine innere Kopplungsstelle 8 und zwei äußere Kopplungsstellen 9. Die innere Kopplungsstelle 8 ist dabei an der Rückseite 3 des Gehäuses 2 angeordnet und befindet sich somit an einer vom Fenster 5 (Vorderseite 5) des Gehäuses 2 abgewandten Seite des Gehäuses 2. Die innere Kopplungsstelle 8 ist dabei als Kugelgelenk ausgestaltet. Im Unterschied dazu sind die äußeren Kopplungsstellen 9 jeweils als Schiebeführung ausgestaltet. Die äußeren Kopplungsstellen 9 sind von der inneren Kopplungsstelle 8 beabstandet angeordnet. Des Weiteren sind die beiden äußeren Kopplungsstellen 9 auch voneinander beabstandet angeordnet. Außerdem können grundsätzlich auch mehr als zwei äußere Kopplungsstellen 9 vorgesehen sein. Bevorzugt wird jedoch die hier gezeigte Variante, bei der genau zwei äußere Kopplungsstellen 9 vorgesehen sind.

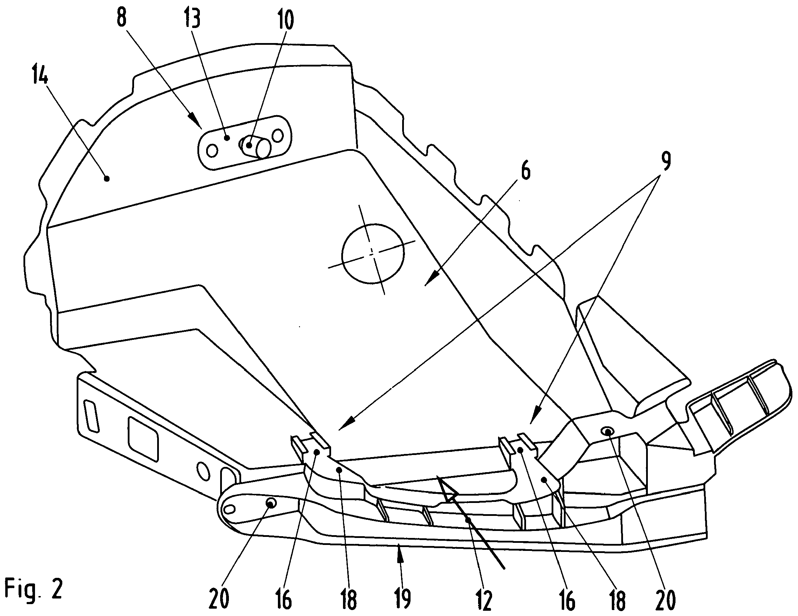

Die innere Kopplungsstelle 8 weist zur Realisierung des Kugelgelenks einen Kugelkopf 10 und eine Kugelpfanne 11 auf. Kugelkopf 10 und Kugelpfanne 11 sind in einer in Fig. 2 durch einen Pfeil angedeuteten Montagerichtung 12 zur Realisierung des Kugelgelenks ineinander gesteckt. Dieser gesteckte Zustand ist in Fig. 3 wiedergegeben. Im gezeigten, bevorzugten Beispiel ist der Kugelkopf 10 an der Gehäuseaufnahme 6 ausgebildet, während die Kugelpfanne 11 am Leuchtengehäuse 2 ausgebildet ist. Es ist klar, dass grundsätzlich auch eine umgekehrte Bauweise möglich ist, bei welcher der Kugelkopf 10 am Leuchtegehäuse 2 und die Kugelpfanne 11 an der Gehäuseaufnahme 6 ausgebildet sind. Kugelkopf 10 und Kugelaufnahme 11 wirken zweckmäßig so zusammen, dass beim Zusammenstecken eine Verclipsung oder Verrastung stattfindet, die eine gewisse Auszugssicherung entgegen der Montagerichtung 12 gewährleistet. Beispielsweise wird diese Verclipsung dadurch erreicht, dass die Kugelpfanne 11 segmentiert ist, wobei die einzelnen Segmente in radialer Richtung federelastisch nachgiebig sind. Beim Einstecken des Kugelkopfs 10 werden diese Pfannensegmente radial verdrängt. Bei hinreichender Einstecktiefe federn die Pfannensegmente dann zurück und hintergreifen den Kugelkopf 10.

Bei der hier gezeigten, bevorzugten Ausführungsform, ist der Kugelkopf 10 bzw. allgemein die aufnahmeseitige Komponente der inneren Kopplungsstelle 8 nicht unmittelbar an der Gehäuseaufnahme 6 ausgebildet, sondern an einer Halteplatte 13. Diese Halteplatte 13 ist an einer Rückwand 14 der Gehäuseaufnahme 6 befestigt, die im montierten Zustand der Rückseite 3 des Gehäuses 2 zugewandt ist. Hierdurch ist es möglich, die aufnahmeseitigen Komponenten der inneren Kopplungsstelle 8, also hier den Kugelkopf 10, separat von der übrigen Gehäuseaufnahme 6 herzustellen. Beispielsweise kann die Gehäuseaufnahme 6 als Blechformteil ausgestaltet sein, während die Halteplatte 13 mit dem aufnahmeseitigen Bestandteil der inneren Kopplungsstelle 8 aus Kunststoff hergestellt ist.

Die äußeren Kopplungsstellen 9 sind zueinander zweckmäßig identisch ausgestaltet. Bei der hier gezeigten, bevorzugten Ausführungsform besitzt die jeweilige äußere Kopplungsstelle 9 einen T-Bolzen 15 sowie eine Führungsnut 16. Die Führungsnut 16 ist dabei so dimensioniert und ausgerichtet, dass der zugehörige T-Bolzen 15 in der Montagerichtung 12 in die Führungsnut 16 einsteckbar ist bzw. im montierten Zustand darin eingesteckt ist. Ferner sind die Führungsnut 16 und der zugehörige T-Bolzen 15 so aufeinander abgestimmt, dass der T-Bolzen 15 im montierten Zustand um eine in Fig. 3 eingezeichnete Längsmittelachse 17 verdrehbar ist, während er gleichzeitig quer zur Montagerichtung 12 formschlüssig in der Führungsnut 16 gesichert ist. Hierzu ist die jeweilige Führungsnut 16 in der Montagerichtung 12 offen und weist C-förmige Seitenabschnitte auf, die den T-Abschnitt des T-Bolzens 15 übergreifen, wenn der T-Bolzen 15 in die Führungsnut 16 eingeführt ist.

Die äußeren Kopplungsstellen 9 besitzen entsprechend der hier vorgestellten Ausführungsform vorzugsweise zusätzlich jeweils eine Führungsfläche 18, die bezüglich der Montagerichtung 12 vor der jeweiligen Längsnut 16 angeordnet ist. Auf dieser Führungsfläche 18 ist der zugehörige T-Bolzen 15 mit seinem T-Abschnitt für den Montagevorgang abstellbar. Die Führungsfläche 18 schließt sich an die offene Seite der jeweiligen Führungsnut 16 an und bildet eine ebene oder rampenförmige Führung zur offenen Seite der jeweiligen Führungsnut 16. Zumindest eine der Führungsflächen 18 kann zusätzlich einen nach oben abstehenden Rand aufweisen, der eine zentrierende Wirkung für den jeweiligen T-Bolzen 15 entfaltet, um das Einführen der T-Bolzen 15 in die Führungsnuten 16 zu erleichtern.

Bei der hier vorgestellten bevorzugten Ausführungsform sind die T-Bolzen 15 am Leuchtengehäuse 2 ausgebildet, und zwar an der Unterseite 4. Im Unterschied dazu sind die Führungsnuten 16 an der Gehäuseaufnahme 6 bzw. an einer Halteleiste 19 der Gehäuseaufnahme 6 ausgebildet. In diesem Fall sind dann auch die Führungsflächen 18 an der Gehäuseaufnahme 6 bzw. an der Halteleiste 19 ausgebildet. Es ist klar, dass grundsätzlich auch eine umgekehrte Bauweise denkbar ist, bei welcher die T-Bolzen 15 an der Gehäuseaufnahme 6 bzw. an deren Halteleiste 19 ausgebildet sind, während die Führungsnuten 16 gegebenenfalls mit den Führungsflächen 18 am Leuchtengehäuse 2 ausgebildet sind. Bevorzugt wird jedoch die hier gezeigte Variante.

Gemäß der hier vorgestellten bevorzugten Bauweise ist somit die innere Kopplungsstelle 8 aufnahmeseitig unmittelbar an der Gehäuseaufnahme 6, nämlich an einem Wandungsteil 14, hier der Rückwand 14, der Gehäuseaufnahme 4 ausgebildet, während die äußeren Kopplungsstellen 9 nur mittelbar an der Gehäuseaufnahme 6 ausgebildet sind, nämlich an der Halteleiste 19. Diese ist relativ zur übrigen Aufnahme 6 positionierbar und kann insbesondere ein bezüglich des Wandungsteils 14 bzw. bezüglich der übrigen Gehäuseaufnahme 6 ein separates Bauteil bilden. Im Beispiel ist die Halteleiste 19 an der übrigen Gehäuseaufnahme 6 befestigt. Entsprechende Befestigungsstellen sind in Fig. 2 mit 20 bezeichnet. Alternativ kann auch vorgesehen sein, die Halteleiste 19 nicht an der übrigen Gehäuseaufnahme 6, sondern direkt an der Fahrzeugkarosserie oder an einer Fahrzeugbeplankung zu befestigen.

Die Halteleiste 19 ist zweckmäßig relativ zum Wandungsteil 14 bzw. relativ zur übrigen Gehäuseaufnahme 6 justierbar angeordnet. Erreicht wird dies beispielsweise über entsprechend dimensionierte Öffnungspaarungen im Bereich der Befestigungsstellen 20, die ein Einstellspiel quer zur Montagerichtung 12 ermöglichen. Beispielsweise können sich kreuzende Langlöcher vorgesehen sein oder dergleichen. Durch Justieren der Position der Halteleiste 19 relativ zur übrigen Gehäuseaufnahme 6 ist es möglich, bei zwei Fugen 21, die im montierten Zustand gemäß Fig. 3 zwischen dem Leuchtengehäuse 2 und der Fahrzeugkarosserie bzw. der Fahrzeugbeplankung 7 auftreten, das Fugenmaß bzw. das Spaltmaß einzustellen. Ermöglicht wird diese Justierbarkeit der Fugen 21 durch die hier vorgestellte Ausgestaltung und Anordnung der Kopplungsstellen 8, 9, insbesondere in Verbindung mit der Halteleiste 19. Das Kugelgelenk der inneren Kopplungsstelle 8 definiert einen Mittelpunkt, um den das Leuchtengehäuse 2 räumlich beweglich ist. Die Schiebeführungen der äußeren Kopplungsstellen 9 können horizontalen, quer zur Montagerichtung 12 verlaufenden Einstellbewegungen der Halteleiste 19 folgen aufgrund der Drehbarkeit der T-Bolzen 15 um ihre Längsmittelachsen 17 in den Führungsnuten 16. Ferner können die äußeren Kopplungsstellen 9 vertikalen Einstellbewegungen der Halteleiste 19 quer zur Montagerichtung 12 folgen, was durch ein entsprechendes Längsspiel parallel zu den Längsmittelachsen 17 zwischen den T-Bolzen 15 und den Führungsnuten 16 realisiert wird. Durch die vereinfachte Justierung des Leuchtengehäuses 2 relativ zu den benachbarten Beplankungen 7 ergibt sich eine entsprechende Montagevereinfachung bzw. ein verbessertes Fugenbild für das jeweilige Fahrzeug. Die Beleuchtungseinrichtung 1 kann einer Fahrzeugseite zugeordnet sein, so dass am Fahrzeug zumindest zwei derartige Beleuchtungseinrichtungen 1 vorhanden sind, nämlich auf jeder Fahrzeugseite zumindest eine. Die Beleuchtungseinrichtung 1 kann als Front-Beleuchtungseinrichtung oder als Heck-Beleuchtungseinrichtung ausgestaltet sein. Grundsätzlich kann somit ein damit ausgestattetes Fahrzeug vier derartige Beleuchtungseinrichtungen 1 aufweisen.

## Patentansprüche

1. Kraftfahrzeug, insbesondere Personenkraftwagen, mit einer Fahrzeugkarosserie oder Fahrzeugbeplankung (7) und einer Beleuchtungseinrichtung mit mindestens einem Leuchtengehäuse (2), das über mehrere Kopplungsstellen (8, 9) in einer an der Fahrzeugkarosserie oder Fahrzeugbeplankung (7) ausgebildeten Gehäuseaufnahme (6) gehalten ist, wobei an einer von einem Fenster (5) des Leuchtengehäuses (2) abgewandten Seite (3) eine innere Kopplungsstelle (8) vorgesehen ist, wobei beabstandet von der inneren Kopplungsstelle (3) zumindest zwei voneinander beabstandete als Schiebeführungen ausgestaltete äußere Kopplungsstellen (9) vorgesehen sind, wobei die innere Kopplungsstelle (8) aufnahmeseitig an einem Wandungsteil (14) der Gehäuseaufnahme (6) ausgebildet ist, während die äußeren Kopplungsstellen (9) aufnahmeseitig jeweils an einer Halteleiste (19) der Gehäuseaufnahme (6) ausgebildet sind, die bezüglich des Wandungsteils (14) hinsichtlich ihrer Relativlage einstellbar oder verstellbar ist und/oder ein separates Bauteil bildet,**dadurch gekennzeichnet, dass** die innere Kopplungsstelle (8) als Kugelgelenk ausgestaltet ist.

2. Kraftfahrzeug nach Anspruch 1, **dadurch gekennzeichnet, dass** die Halteleiste (19) zum Einstellen von Spaltmaßen zwischen Leuchtengehäuse (2) und Fahrzeugkarosserie oder Fahrzeugbeplankung (7) relativ zum Wandungsteil (14) justierbar angeordnet ist.

3. Kraftfahrzeug nach einem der Ansprüche 1 bis 2, **dadurch gekennzeichnet, dass** die innere Kopplungsstelle (8) einen Kugelkopf (10) und eine Kugelpfanne (11) aufweist, in die der Kugelkopf (10) in eine Montagerichtung (12) eingesteckt ist.

4. Kraftfahrzeug nach Anspruch 3, **dadurch gekennzeichnet, dass** der Kugelkopf (10) an der Gehäuseaufnahme (6) ausgebildet ist, während die Kugelpfanne (11) am Leuchtengehäuse (2) ausgebildet ist.

5. Kraftfahrzeug nach Anspruch 3 oder 4, **dadurch gekennzeichnet, dass** der Kugelkopf (10) in der Kugelpfanne (11) verclipst oder verrastet ist.

6. Kraftfahrzeug nach einem der Ansprüche 1 bis 5, **dadurch gekennzeichnet, dass** die innere Kopplungsstelle (8) aufnahmeseitig an einer Halteplatte (13) ausgebildet ist, die an der Gehäuseaufnahme (6) befestigt ist.

7. Kraftfahrzeug nach einem der Ansprüche 1 bis 6, **dadurch gekennzeichnet, dass** die jeweilige äußere Kopplungsstelle (9) einen T-Bolzen (15) und eine Führungsnut (16) aufweist, in die der T-Bolzen (15) in einer Montagerichtung (12) eingesteckt ist, wobei der T-Bolzen (15) in der Führungsnut (16) um eine Längsmittelachse (17) des T-Bolzens (15) verdrehbar ist und quer zur Montagerichtung (12) formschlüssig gesichert ist.

8. Kraftfahrzeug nach Anspruch 7, **dadurch gekennzeichnet, dass** die T-Bolzen (15) am Leuchtengehäuse (2) und die Führungsnuten (16) an der Gehäuseaufnahme (6) ausgebildet sind.

9. Kraftfahrzeug nach Anspruch 7 oder 8, **dadurch gekennzeichnet, dass** die äußeren Kopplungsstellen (9) bezüglich der Montagerichtung (12) vor den Führungsnuten (16) jeweils eine Führungsfläche (18) aufweisen, auf welcher der T-Bolzen (15) zum Einführen in die jeweilige Führungsnut (16) abstellbar ist.

## Claims

1. Motor vehicle, in particular passenger car, having a vehicle body or vehicle panelling (7) and an illumination device with at least one lamp housing (2) which is held via a plurality of coupling points (8, 9) in a housing receptacle (6) which is configured on the vehicle body or vehicle panelling (7), an inner coupling point (8) being provided on a side (3) which faces away from a window (5) of the lamp housing (2), at least two outer coupling points (9) which are spaced apart from one another and are configured as sliding guides being provided in a manner which is spaced apart from the inner coupling point (3), the inner coupling point (8) being configured on the receptacle side on a wall part (14) of the housing receptacle (6), whereas the outer coupling points (9) are configured on the receptacle side in each case on a holding rail (19) of the housing receptacle (6), which holding rail (19) can be set or adjusted in respect of its relative position with regard to the wall part (14) and/or forms a separate component, **characterized in that** the inner coupling point (8) is configured as a ball joint.

2. Motor vehicle according to Claim 1, **characterized in that** the holding rail (19) is arranged adjustably relative to the wall part (14) in order to set shut lines between the lamp housing (2) and the vehicle body or the vehicle panelling (7).

3. Motor vehicle according to either of Claims 1 and 2, **characterized in that** the inner coupling point (8) has a ball head (10) and a ball socket (11), into which the ball head (10) is plugged in a mounting direction (12).

4. Motor vehicle according to Claim 3, **characterized in that** the ball head (10) is configured on the housing receptacle (6), whereas the ball socket (11) is configured on the lamp housing (2).

5. Motor vehicle according to Claim 3 or 4, **characterized in that** the ball head (10) is clipped or latched in the ball socket (11).

6. Motor vehicle according to one of Claims 1 to 5, **characterized in that** the inner coupling point (8) is configured on the receptacle side on a holding plate (13) which is fastened to the housing receptacle (6).

7. Motor vehicle according to one of Claims 1 to 6, **characterised in that** the respective outer coupling point (9) has a T bolt (15) and a guide groove (16), into which the T bolt (15) is plugged in a mounting direction (12), it being possible for the T bolt (15) to be rotated in the guide groove (16) about a longitudinal centre axis (17) of the T bolt (15), and the said T bolt (15) being secured in a positively locking manner transversely with respect to the mounting direction (12).

8. Motor vehicle according to Claim 7, **characterized in that** the T bolts (15) are configured on the lamp housing (2), and the guide grooves (16) are configured on the housing receptacle (6).

9. Motor vehicle according to Claim 7 or 8, **characterized in that** the outer coupling points (9) in each case have a guide face (18) in front of the guide grooves (16) with regard to the mounting direction. (12), on which guide face (18) the T bolt (15) can be set down for introducing into the respective guide groove (16).

## Revendications

1. Véhicule automobile, en particulier véhicule de tourisme, comprenant une carrosserie de véhicule ou un panneau de véhicule (7) et un dispositif d'éclairage comprenant au moins un boîtier de lampe (2) qui est retenu dans un logement de boîtier (6) réalisé au niveau de la carrosserie du véhicule ou du panneau de véhicule (7) au moyen de plusieurs points d'accouplement (8, 9), un point d'accouplement intérieur (8) étant prévu au niveau d'un côté (3) opposé à une fenêtre (5) du boîtier de lampe (2), au moins deux points d'accouplement extérieurs (9) espacés l'un de l'autre, réalisés sous forme de guides coulissants, étant prévus à distance du point d'accouplement intérieur (3), le point d'accouplement intérieur (8) étant réalisé du côté du logement au niveau d'une partie de paroi (14) du logement de boîtier (6), tandis que les points d'accouplement extérieurs (9) sont réalisés du côté du logement à chaque fois au niveau d'une baguette de retenue (19) du logement de boîtier (6) dont la position relative par rapport à la partie de paroi (14) peut être ajustée ou réglée et/ou qui forme un composant séparé, **caractérisé en ce que** le point d'accouplement intérieur (8) est réalisé sous forme d'articulation sphérique.

2. Véhicule automobile selon la revendication 1, **caractérisé en ce que** la baguette de retenue (19) est disposée de manière ajustable par rapport à la partie de paroi (14) pour l'ajustement de dimensions de fente entre le boîtier de lampe (2) et la carrosserie du véhicule ou le panneau de véhicule (7).

3. Véhicule automobile selon l'une quelconque des revendications 1 et 2, **caractérisé en ce que** le point d'accouplement intérieur (8) présente une tête sphérique (10) et une cavité sphérique (11) dans laquelle est enfoncée la tête sphérique (10) dans une direction de montage (12).

4. Véhicule automobile selon la revendication 3, **caractérisé en ce que** la tête sphérique (10) est réalisée au niveau du logement de boîtier (6) tandis que la cavité sphérique (11) est réalisée au niveau du boîtier de lampe (2).

5. Véhicule automobile selon la revendication 3 ou 4, **caractérisé en ce que** la tête sphérique (10) est encliquetée ou emboîtée dans la cavité sphérique (11).

6. Véhicule automobile selon l'une quelconque des revendications 1 à 5, **caractérisé en ce que** le point d'accouplement intérieur (8) est réalisé du côté du logement au niveau d'une plaque de retenue (13) qui est fixée au logement de boîtier (6).

7. Véhicule automobile selon l'une quelconque des revendications 1 à 6, **caractérisé en ce que** le point d'accouplement extérieur respectif (9) présente un boulon en T (15) et une rainure de guidage (16) dans laquelle le boulon en T (15) est enfoncé dans une direction de montage (12), le boulon en T (15) dans la rainure de guidage (16) pouvant tourner autour d'un axe médian longitudinal (17) du boulon en T (15) et étant fixé par engagement par correspondance de formes transversalement à la direction de montage (12).

8. Véhicule automobile selon la revendication 7, **caractérisé en ce que** les boulons en T (15) sont réalisés au niveau du boîtier de lampe (2) et les rainures de guidage (16) sont réalisées au niveau du logement de boîtier (6).

9. Véhicule automobile selon la revendication 7 ou 8, **caractérisé en ce que** les points d'accouplement extérieurs (9), présentent à chaque fois une surface de guidage (18) avant les rainures de guidage (16), par rapport à la direction de montage (12), sur laquelle le boulon en T (15) peut être déposé de manière à être introduit dans la rainure de guidage respective (16).
